# EUROPEAN PATENT SPECIFICATION

(11) **EP 2 728 301 B1**
(45) Date of publication and mention of the grant of the patent: **16.09.2015**
(21) Application number: 13189953.6
(22) Date of filing: 23.10.2013
(51) Int. Cl.: G01B 3/16, G01B 5/08, G01B 5/12

(54) **Measurement tool**
Messinstrument
Outil de mesure

(30) Priority: 31.10.2012 GB 201219562
(43) Date of publication of application: 07.05.2014
(73) Proprietor: National Oilwell Varco, L.P., Houston, TX 77036 (US)
(72) Inventor: Krijnen, Antonius Dimphena Maria, 4971 SJ Klundert (NL); Verhoef, Richard, 8491 DH Akkrum (NL)
(74) Representative: Oxley, Robin John George

(56) References cited:
- EP-A1- 2 211 136
- CH-A- 439 768
- DE-A1- 19 538 371
- DE-U1-202006 017 162
- GB-A- 104 839
- GB-A- 191 022 331
- US-A- 1 345 071
- US-A- 2 362 907
- US-A- 2 603 872
- US-A- 2 928 182
- US-A- 2 979 825
- US-A- 4 635 370

## Description

This invention relates to a measurement tool allowing parameters of a pipe to be measured. References to 'pipe' herein should be understood to include pipes, tubes, tubulars, tubing and the like. The tool further permits corresponding parameters of associated equipment, such as elevators or other similar tools, components and products, including downhole tools, to be measured.

In a drilling environment, it is usual for large, heavy lengths or sections of drilling pipe to be manoeuvred using so-called elevators. The pipe sections may be of a range of designs, for example having different inner and outer diameters and/or the end fittings thereof which allow the pipe sections to be connected to one another may also be of various designs. When such pipe sections are being moved, it is important to ensure that the correct elevator is used, or that the settings thereof are correct, in order to ensure that the pipe sections do not work loose from the elevator whilst being moved. It will be appreciated that failure to do so could result in the pipe section being moved falling, sometimes from a considerable height, and so carries the risk of serious injury. It has been estimated that around 75% of so called 'dropped pipe' incidents are caused by the use of the incorrect elevator.

Furthermore, even where the correct elevator is used, time is wasted if a pipe section is moved into position for coupling to another pipe section, only to find that the end fittings thereof are incompatible.

There is a need, therefore, to provide a measurement tool whereby various parameters of a pipe section and/or equivalent parameters of an elevator or other tool can be measured to ensure that the correct elevator is used to move the pipe section, and to ensure that the pipe section is compatible with the other pipe sections to which it is to be secured.

The working environment in which such pipes are handled is generally noisy and dirty. Operators working in this environment generally wear protective clothing including protective gloves. The gloves may hamper the operation of complex measurement tools. It is desirable that the measurement tool can be operated with just one hand, allowing the operator to use his free hand to hold the pipe section. Ideally, the tool is small enough that an operator can keep it about his person, for example in a pocket or clipped to a belt, so that it is at hand when required. The measurement tool should be suitable for use in a dirty environment, and be hard wearing. Ideally, it should be a relatively low cost item so that it can be replaced if damaged or lost. Furthermore, a single tool should ideally be capable of being used to measure several or all of the relevant parameters, so as to minimise the number of different tools that an operator needs to use. In addition, as there is the risk that the tool could be dropped into or otherwise fall into a borehole, it is desirable for the tool to be of a material which can be drilled through without causing significant damage to a drill bit, in use.

Current tools suitable for use in pipe and/or elevator measurement include callipers, of either pivoted or linear form, but these have the disadvantage that they typically require two hands to use them and typically have to be of large size where used with large diameter pipes. Static gauges are also used, but are of limited use particularly where large diameter pipes are used. Pantograph type devices may be used, and allow inner diameter measurements to be made with the device in situ, which allows enhancements in measurement accuracy, but they tend to be of large size. Whilst these types of tool may allow measurement of certain pipe related parameters, they are not ideally suited for use in the drilling operating environment, and typically are only capable of measuring one of required parameters and so are of limited use.

US2979825, US2928182, US2362907, and US1345071 all describe measurement tools for use in measuring the inner and/or outer diameters of pipe sections.

According to the present invention there is provided a measurement tool according to claim 1, comprising a first leg, a second leg pivotally connected to the first leg, and a scale provided the first leg, wherein a point at which the second leg intersects with the scale provides an indication of the value of at least one of the inner diameter of the bore of a drill pipe section and/or elevator in a borehole drilling environment, the outer diameter of the pipe section, and an angle of a surface of the pipe section and/or elevator relative to a datum surface thereof, and characterised in that a handle is provided on one of the legs, and an actuating lever is provided on the other of the legs.

Preferably, two or more such parameters may be measured using a single tool. As a result, an operator does not need to carry a number of different tools in order to take the required measurements.

Where the tool is used to measure the inner diameter of a pipe section or elevator, the tool is inserted into the bore of the pipe section or elevator and the legs splayed apart until they bear against the inner surface of the wall thereof. The tool is then withdrawn and the scale used to read off the inner diameter measurement. Where the scale is provided on the first leg, this is done by noting the point at which the second leg intersects the scale.

Where the tool is used to measure the angle of a pipe or elevator surface, the first and second legs are placed flat against a datum surface, such as the end face of the pipe section, and the said pipe surface, and the angle is read off from the scale.

Where the tool is used to measure the external pipe diameter, the tool is positioned such that the first and second legs, and a point adjacent the pivotal connection therebetween all engage the pipe surface, and the value of the parameter is read off from the scale. It will be appreciated that this three point contact allows an accurate value of the pipe diameter to be derived.

The tool is conveniently of plastics construction, with a metallic pivot, and so is of relatively low weight, hard wearing and of good strength. It is conveniently resistant to chemical damage. Scales provided on the tool are preferably moulded into the tool, thereby reducing the risk of abrasion causing the scales to become illegible. The tool is preferably of a material capable of being drilled through without causing damage to the drill bit. Consequently, should the tool fall into a borehole being drilled, the drilling operation may continue.

The handle and lever are engageable, in use, by the fingers of one hand such that the operator is able to move the legs of the tool by manipulation of the lever relative to the handle using just one hand.

It will be appreciated that by using the tool to measure the required pipe section and/or elevator parameters, safety can be enhanced and time wastage can be reduced.

The invention will further be described, by way of example, with reference to the accompanying drawings, in which:
Figure 1 is a view illustrating a pipe measurement tool in accordance with one embodiment of the invention;
Figures 2a and 2b illustrate the tool of Figure 1 in use in one mode of operation;
Figures 3a to 3c illustrate the tool of Figure 1 in another mode of operation;
Figure 4 illustrates an example which is not part of the present invention;
Figures 5 and 5a illustrate the tool of Figure 4 being used in angle measurement; and
Figure 6 illustrates a further example which is not part of the present invention;

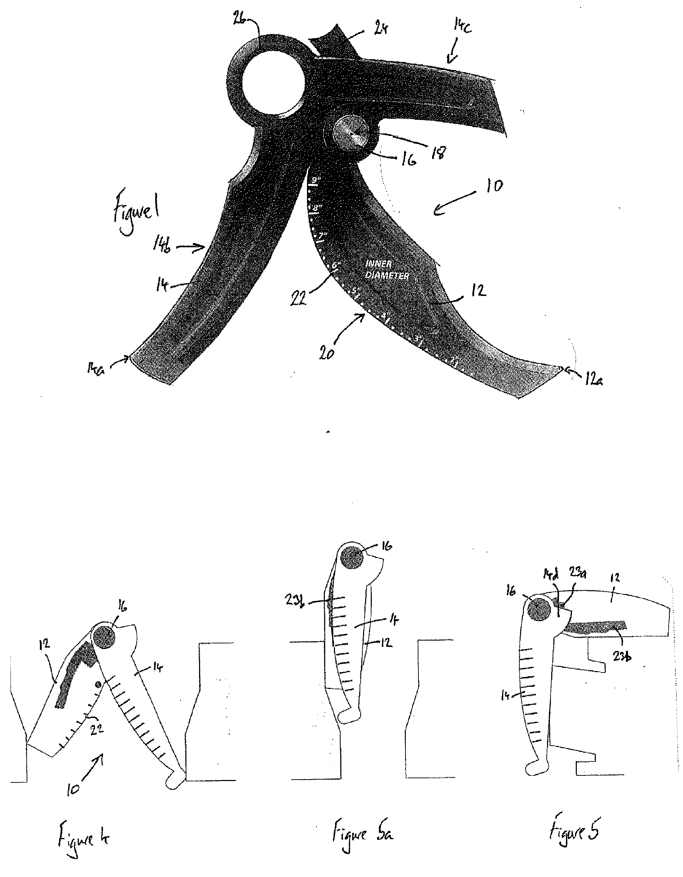

Referring firstly to Figures 1 to 3, a pipe measurement tool 10 is shown which comprises a first leg 12 pivotally connected to a second leg 14. The pivotal connection between the first and second legs 12, 14 is established by means of a pivot pin 16 secured to the first and second legs 12, 14, the pivot pin 16 defining a pivot axis 18 about which the second leg 14 can be moved relative to the first leg 12.

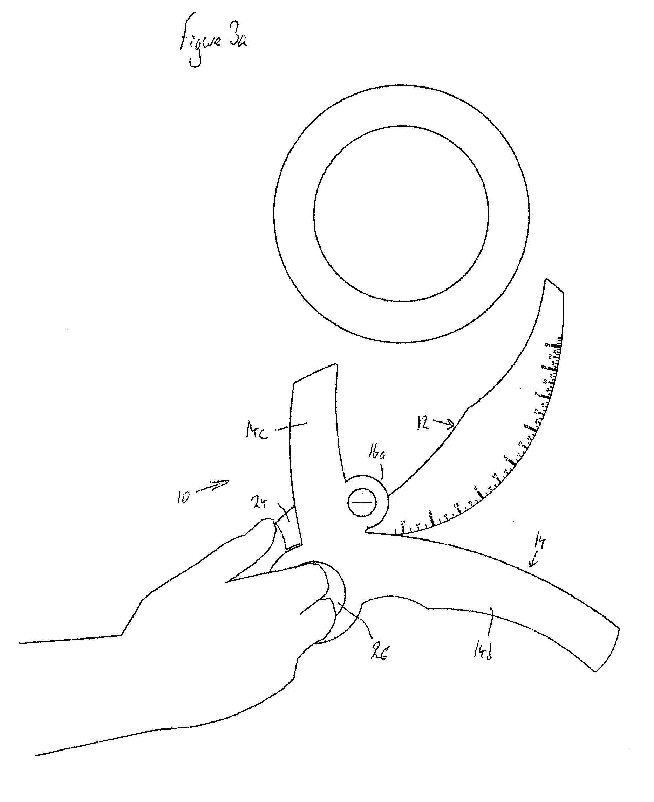

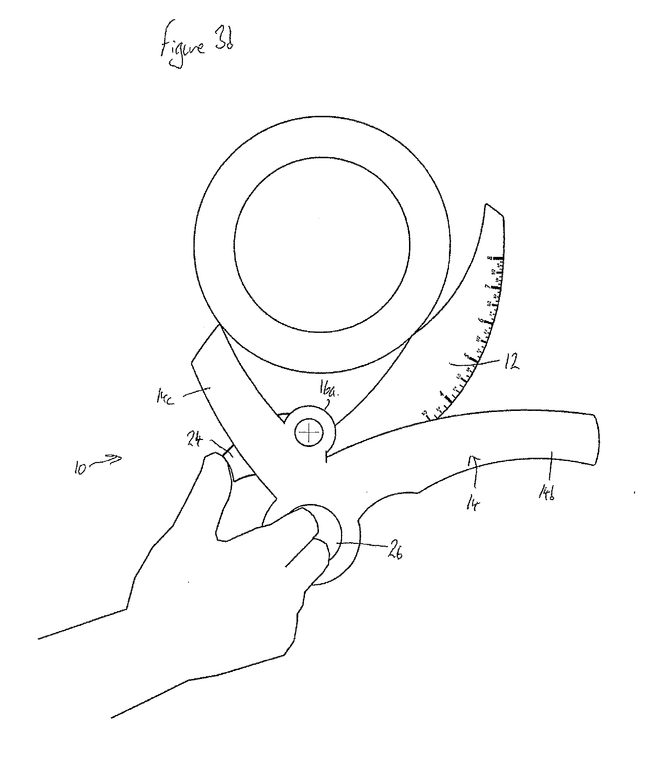

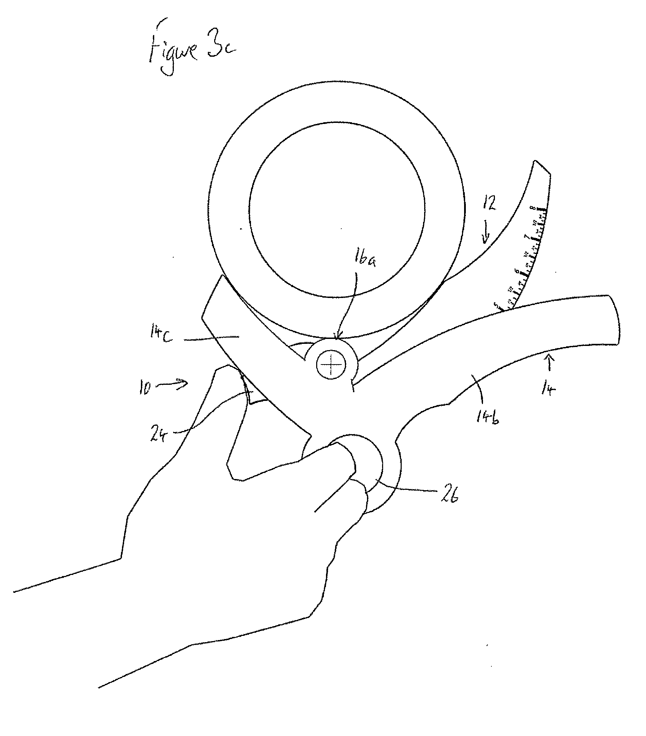

The first leg 12 includes a curved edge 20 adjacent which are provided scale markings 22. The scale markings 22 are intended to provide, in conjunction with the second leg 14, a read out indicative of the inner diameter or bore diameter of a pipe section, in use. The opposite side of the first leg 12 is provided with a second set of scale markings 23 (see Figure 3) intended for use in providing a read out of the outer diameter of a pipe section, when use to measure that parameter.

The pivotal connection between the first and second legs 12, 14 is part way along the length of the first leg 12, and a part thereof on the opposite side of the pivotal connection from the part provided with the scale 22 defines an actuating lever 24.

The second leg 14 is formed, at a point adjacent the pivotal connection with the first leg 12, with a handle 26 in the form of a loop. In use, an operator may hold the tool 10 by the handle 26 using the fingers of one hand, with his thumb positioned on the lever 24, and in this position may displace the lever 24 relative to the handle 26, driving the first leg 12 for pivotal movement relative to the second leg 14, either increasing or decreasing the angle therebetween.

The second leg 14 is of rigid, generally L-shaped form with the handle 26 and the pivot pin 16 located substantially at the intersection between the limbs 14b, 14c thereof. The second leg 14 thus defines a first limb 14b able to overlie the scale 22, depending upon the position of the second leg 14 relative to the first leg 12, and a second limb 14c to the opposite side of the pivotal connection and extending substantially perpendicularly to the first limb 14b.

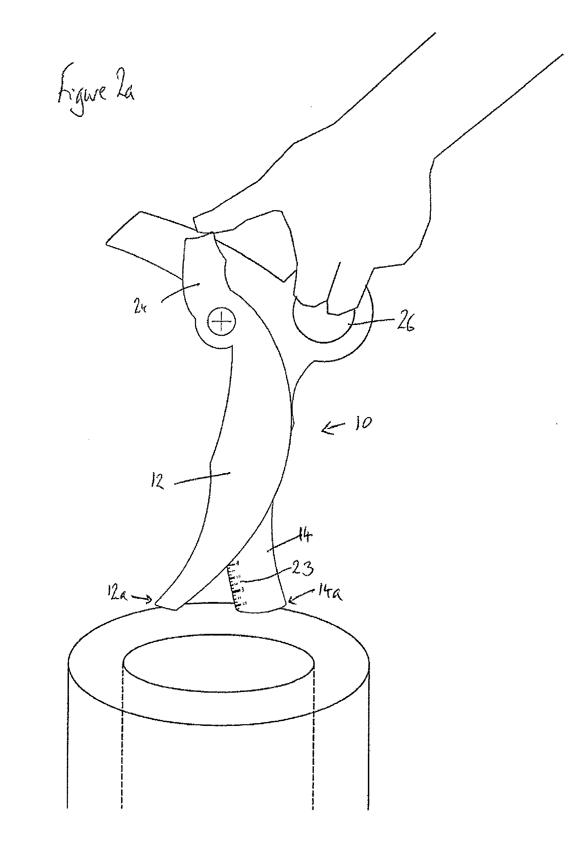

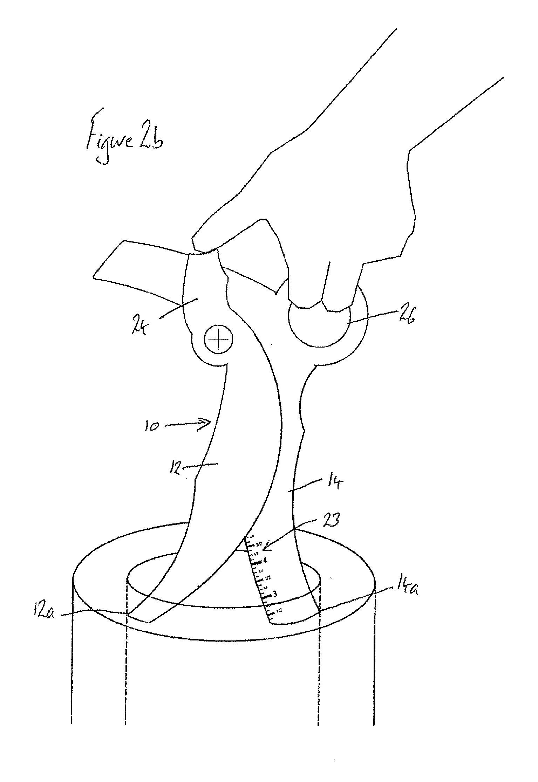

In use, as shown in Figures 2a and 2b, where the tool 10 is to be used to measure the inner diameter of the pipe section, the tool 10 is introduced into the bore of the pipe section in a contracted condition (see Figure 2a), and the operator then adjusts the position of the lever 24 relative to the handle 26 to drive the first and second legs 12, 14 apart until the tips 12a, 14a thereof bear against the inner surface of the pipe section (see Figure 2b). Once this position has been attained, the tool 10 is carefully removed from the pipe section, taking care not to move the first leg 12 relative to the second leg 14. The pivotal connection therebetween is preferably set such that there is sufficient resistance to relative movement that this can be achieved relatively easily.

As the tips 12a, 14a are at fixed respective distances from the pivot axis 18, it will be appreciated that the angle between the legs 12, 14 is related to and provides an indication of the distance between the tips 12a, 14a, and hence the inner diameter of the pipe section. The position of the pivot axis 18 and widths of the legs 12, 14 are such that the point at which the second leg 14 intersects the scale 22 can be used to provide an indication of this angle. For convenience, rather than have the scale 22 graduated in degrees, the scale 22 is graduated in distance measurement so that the graduations show the separation of the tips 12a, 14a. Conventionally, drill pipe diameter measures are quoted in inches, and so the scale markings 22 are graduated according.

After removal of the tool 10, the point at which the limb 14b of the second leg 14 intersects the scale markings 22 can thus be read off to provide an indication of the inner diameter of the pipe section. The legs 12, 14 are conveniently relatively thin so as to allow easy, accurate readings to be taken.

As shown in Figures 3a to 3c, the outer diameter of the pipe section can be measured by positioning the tool 10 such that the second limb 14c of the second leg 14, the first leg 12 and a point 16a adjacent the pivotal connection between the legs 12, 14 all engage the outer surface of the pipe section (see Figure 3c).

The point 16a is spaced from the pivot axis 18 by a fixed distance. The second limb 14c and first leg 12, in this measurement position, lie substantially tangential to the pipe section. By positioning the legs 12, 14 such that the leg 12 and the second limb 14c are substantially tangential to the pipe section, and the pivot axis 18 by which the legs 12, 14 are interconnected is as a fixed distance from the surface of the pipe section, the angle between the first leg 12 and the second limb 14c, and hence between the first and second legs 12, 14, is related to the outer diameter of the pipe.

The scale markings 23 are graduated in distance measurements representative of the outer diameter of the pipe section. It will be appreciated that the scale markings for the inner diameter will most likely not be related to those for the outer diameter and so the operator will need to be careful to ensure that he reads the parameter values from the correct scale markings.

Accordingly, once this measurement position has been reached, the point at which the first limb 14b of the second leg 14 intersects the scale markings 23 provided on the reverse side of the first leg 12 provides an indication of the outer diameter of the pipe section.

The tool 10 is simple to operate, can be used in a single handed manner, is robust, compact and lightweight, and so can easily be carried by a user, for example in a pocket or clipped to a tool belt, and is suitable for use in harsh environments. Conveniently it can measure inner diameters over a wide range of standard pipe sizes. The scale markings 22, 23 are conveniently moulded into the first leg 12 so that the risk of them wearing off is reduced. The tool can be produced in highly visible colours, so that the risk of it becoming lost is reduced. Conveniently, the pivotal connection between the legs 12, 14 can be adjusted to vary the resistance to movement between the legs 12, 14. The tool allows at least two different parameters to be measured.

It should be noted that the tool described hereinbefore is intended for use only in measuring internal and external diameters. However, it could, if desired, be adapted to allow other parameters to be measured. For example, by appropriate modification, it may be possible to use the tool to measure the angles of various surfaces relative to a datum surface.

Figures 4 and 5 illustrate example which is not part of the present invention. As shown in Figure 4, the tool 10 of this embodiment can be used in a manner similar to that of Figure 1 for measuring inner diameters. As illustrated, outer diameter measurement is not possible with this design, although it could be modified to operate in a manner similar to that of Figure 1 to provide this functionality. Figure 5 illustrates the tool 10 being used to measure the angle of a pipe surface relative to an end of the pipe section. As shown, this is achieved by positioning the first leg 12 against the end of the pipe section, and positioning the second leg 14 against the surface of interest. The position of the tool 10 is adjusted until the legs 12, 14 lie flat against the respective surfaces of the pipe section. Once this position has been reached, noting the position at which a part 14c of the second leg 14 intersects scale markings 23a provided on the first leg 12 provides the required angle information.

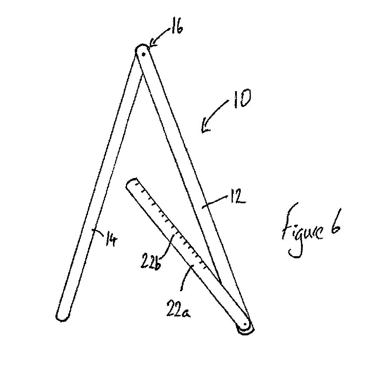

Whilst Figure 5 illustrates the measuring of relatively large angles, the tool 10 may also be used to measure smaller angles using another scale 23b, as shown in Figure 5a. Figure 6 illustrates a further example which is not part of the present invention in which a rule 22a provided with a scale 22b is pivotally connected to the first leg 12 and is arranged so that, after displacing the legs 12, 14 apart to measure the inner diameter of a pipe, the separation of the ends of the legs 12, 14, and hence the inner diameter, can be measured by moving the rule 22a to allow the separation of the ends of the legs 12, 14 to be read off from the scale 22b.

Although the description hereinbefore relates primarily to the measurement of pipe section parameters, it will be appreciated that the tool is also suitable for use in the measurement of the corresponding parameters of an elevator. In use, it is envisaged that the tool will be used to measure both the pipe section parameters and the corresponding parameters of the elevator to ensure that the elevator and pipe section are compatible with one another before the elevator is used to move the pipe section.

Whilst reference is made hereinbefore to the use of the tool in measuring parameters associated with pipes and elevators, it will be appreciated that the invention is not restricted in this regard. Furthermore, the term 'pipe' should be understood to include pipes, tubes, tubulars, tubing and the like, and the tool may be used in measuring parameters of equipment other than elevators, for example parameters associated with other components and/or tools including downhole tools, may be measured using the tool. The tool may thus be used in measuring the inner and/or outer diameter, or other parameters, of a wide range components, tools, etc, in a simple and convenient manner.

Whilst the description hereinbefore, and the accompanying drawings, relate to three specific embodiments, it will be appreciated that the invention is not restricted in this regard and that a number of modifications and alterations may be made to the arrangements described and illustrated without departing from the scope of the invention as defined by the appended claims.

## Claims

1. A measurement tool for measuring a drill pipe section and/or elevator in a borehole drilling environment, the tool comprising a first leg (12), a second leg (14) pivotally connected to the first leg (12), and a scale (22) provided on the first leg (12), wherein a point at which the second leg (14) intersects with the scale (22) provides an indication of the value of at least one of the inner diameter of the bore of a drill pipe section and/or elevator in a borehole drilling environment, the outer diameter of the pipe section, and an angle of a surface of the pipe section and/or elevator relative to a datum surface thereof, and **characterised in that** a handle (26) is provided on one of the legs (12, 14), and an actuating lever (24) is provided on the other of the legs (12,14).

2. A tool according to any of the preceding claims and arranged for use in measuring the inner diameter of the bore of the pipe section and/or elevator, wherein each leg (12, 14) includes a tip (12a,14a), and the scale (22) provides an indication of the separation of the tips (12a, 14a) of the legs (12, 14).

3. A tool according to any of the preceding claims and arranged for use in measuring the outer diameter of the pipe section, wherein the second leg (14) includes a first limb (14b) and a second limb (14c), and wherein when the first leg (12), the second limb (14c) and a point (16a) adjacent the pivotal connection between the first and second legs (12, 14) all engage the outer periphery of the pipe section, the scale (22) provides an indication of the pipe diameter.

4. A tool according to Claim 3, wherein the point at which the first limb (14b) of the second leg (14) intersects with the scale (22) provides an indication of the diameter.

5. A tool according to any of the preceding claims, and arranged to measure an angle of a surface of the pipe section and/or elevator relative to a datum surface thereof, wherein the first and second legs (12, 14) are placed flat against a datum surface and the said pipe and/or elevator surface, and the angle is read off from the scale.

6. A tool according to Claim 5, wherein that datum surface comprises the end surface of the pipe section and/or elevator.

7. A tool according to any of the preceding claims, wherein the legs (12, 14) of the tool are of plastics construction.

8. A tool according to any of the preceding claims, wherein a metallic pivot is provided between the first and second legs (12, 14).

9. A tool according to any of the preceding claims, wherein the handle (26) is positioned such that increasing the separation of the lever (24) from the handle (26) reduces the spacing of the legs (12, 14).

## Patentansprüche

1. Messinstrument für das Messen eines Bohrrohrabschnittes und/oder eines Elevators an einem Standort für das Bohren von Bohrlöchern, wobei das Instrument aufweist:
einen ersten Schenkel (12); einen zweiten Schenkel (14), der drehbar mit dem ersten Schenkel (12) verbunden ist; und eine Skala (22), die am ersten Schenkel (12) vorhanden ist,
wobei ein Punkt, in dem sich der zweite Schenkel (14) mit der Skala (22) schneidet, eine Anzeige des Wertes von mindestens einem von Innendurchmesser der Bohrung eines Bohrrohrabschnittes und/oder Elevators an einem Standort für das Bohren von Bohrlöchern, Außendurchmesser des Rohrabschnittes und einem Winkel einer Fläche des Rohrabschnittes und/oder des Elevators relativ zu einer Bezugsfläche davon liefert, und **dadurch gekennzeichnet, dass** ein Griff (26) an einem der Schenkel (12, 14) vorhanden ist, und dass ein Betätigungshebel (24) am anderen der Schenkel (12, 14) vorhanden ist.

2. Instrument nach einem der vorhergehenden Ansprüche und ausgebildet für eine Verwendung beim Messen des Innendurchmessers der Bohrung des Rohrabschnittes und/oder Elevators, wobei ein jeder Schenkel (12, 14) eine Spitze (12a, 14a) umfasst, und die Skala (22) eine Anzeige des Abstandes der Spitzen (12a, 14a) der Schenkel (12, 14) liefert.

3. Instrument nach einem der vorhergehenden Ansprüche und ausgebildet für eine Verwendung beim Messen des Außendurchmessers des Rohrabschnittes, wobei der zweite Schenkel (14) einen ersten Gradbogen (14b) und einen zweiten Gradbogen (14c) umfasst, und wobei, wenn der erste Schenkel (12), der zweite Gradbogen (14c) und ein Punkt (16a) benachbart der Drehverbindung zwischen dem ersten und dem zweiten Schenkel (12, 14) alle mit dem äußeren Umfang des Rohrabschnittes in Berührung kommen, die Skala (22) eine Anzeige des Rohrdurchmessers liefert.

4. Instrument nach Anspruch 3, bei dem der Punkt, in dem sich der erste Gradbogen (14b) des zweiten Schenkels (14) mit der Skala (22) schneidet, eine Anzeige des Durchmessers liefert.

5. Instrument nach einem der vorhergehenden Ansprüche und ausgebildet, um einen Winkel einer Fläche des Rohrabschnittes und/oder des Elevators relativ zu einer Bezugsfläche davon zu messen, wobei der erste und der zweite Schenkel (12, 14) flach an einer Bezugsfläche und der Rohr- und/oder Elevatorfläche angeordnet werden und der Winkel von der Skala abgelesen wird.

6. Instrument nach Anspruch 5, bei dem die Bezugsfläche die Endfläche des Rohrabschnittes und/oder Elevators aufweist.

7. Instrument nach einem der vorhergehenden Ansprüche, bei dem die Schenkel (12, 14) des Instrumentes eine Kunststoffkonstruktion sind.

8. Instrument nach einem der vorhergehenden Ansprüche, bei dem eine metallische Drehachse zwischen dem ersten und dem zweiten Schenkel (12, 14) vorhanden ist.

9. Instrument nach einem der vorhergehenden Ansprüche, bei dem der Griff (26) so positioniert ist, dass eine Zunahme des Abstandes des Hebels (24) vom Griff (26) den Abstand der Schenkel (12, 14) verringert.

## Revendications

1. Outil de mesure permettant de mesurer une section de tige de forage et/ou un élévateur dans un environnement de forage de puits de forage, l'outil comprenant :
une première branche (12), une seconde branche (14) raccordée pivotante à la première branche (12), et une échelle (22) fournie sur la première branche (12),
dans lequel un point au niveau duquel la seconde branche (14) croise l'échelle (22) fournit une indication de la valeur d'au moins un parmi le diamètre intérieur de l'âme d'une section de tige de forage et/ou d'un élévateur dans un environnement de forage de puits de forage, le diamètre extérieur de la section de tige, et un angle d'une surface de la section de tige et/ou de l'élévateur par rapport à sa surface de référence, et **caractérisé en ce qu'**une poignée (26) est fournie sur une des branches (12, 14), et un levier d'actionnement (24) est fourni sur l'autre des branches (12, 14).

2. Outil selon l'une quelconque des revendications précédentes, et agencé pour une utilisation consistant à mesurer le diamètre intérieur de l'âme de ladite section de tige et/ou dudit élévateur, dans lequel chaque branche (12, 14) comprend un bout (12a, 14a), et l'échelle (22) fournit une indication sur l'écartement entre les bouts (12a, 14a) des branches (12, 14).

3. Outil selon l'une quelconque des revendications précédentes, et agencé pour une utilisation consistant à mesurer le diamètre extérieur de la section de tige, dans lequel la seconde branche (14) comprend un premier membre (14b) et un second membre (14c), et dans lequel, lorsque la première branche (12), le second membre (14c) et un point (16a) adjacent au raccordement à pivot entre les première et seconde branches (12, 14) viennent tous en prise avec la périphérie extérieure de la section de tige, l'échelle (22) fournit une indication du diamètre de tige.

4. Outil selon la revendication 3, dans lequel le point au niveau duquel le premier membre (14b) de la seconde branche (14) croise l'échelle (22) fournit une indication du diamètre.

5. Outil selon l'une quelconque des revendications précédentes, et agencé pour mesurer un angle d'une surface de ladite section de tige et/ou dudit élévateur par rapport à sa surface de référence, dans lequel les première et seconde branches (12, 14) sont placées à plat contre une surface de référence et ladite surface de tige et/ou d'élévateur, et l'angle est lu sur l'échelle.

6. Outil selon la revendication 5, dans lequel ladite surface de référence comprend la surface terminale de la section de tige et/ou de l'élévateur.

7. Outil selon l'une quelconque des revendications précédentes, dans lequel les branches (12, 14) de l'outil sont réalisées en matière plastique.

8. Outil selon l'une quelconque des revendications précédentes, dans lequel un pivot métallique est fourni entre les première et seconde branches (12, 14).

9. Outil selon l'une quelconque des revendications précédentes, dans lequel la poignée (26) est positionnée de telle manière qu'une augmentation de l'écartement entre le levier (24) et la poignée (26) réduit l'espacement des branches (12, 14).
